# EUROPEAN PATENT APPLICATION

(11) **EP 2 940 548 A1**
(43) Date of publication of application: **04.11.2015**
(21) Application number: 14166774.1
(22) Date of filing: 01.05.2014
(51) Int. Cl.: G05D 7/01

(54) **A valve insert**

(71) Applicant: FRESE A/S, 4200 Slagelse (DK)
(72) Inventor: Rasmussen, Christian Bo, 5230 Odense M (DK)
(74) Representative: Rørdam, Troels Peter

(57) **Abstract**

A valve insert (1) comprising a valve housing (3) with at least one opening (9), a hollow valve element (2) with an inner diameter, d2, the valve element (2) being arranged to be displaceable within the valve housing (3) along a longitudinal axis, L, of the valve insert (1), a circumferential diaphragm (8) extending between an outer surface (22) of the valve element (2) and an inner surface (31) of the valve housing (3), a helical spring (6) extending substantially along the longitudinal axis, L, having an outer spring diameter, d6, and arranged within the valve element (2) to bias the valve element (2) towards the open position, the helical spring (6) having an upper end (6b) supported by an upper spring support (7) attached axially fixed to the valve element (2), and a cover disc (4) with a central inlet opening (5), the cover disc (4) being adapted for being positioned in a use position at the top end of the valve element (2) in which use position the size of the central inlet opening (5) presets a maximum flow through the valve insert (2), the outer spring diameter, d6, being less than 90 % of the inner diameter, d2, of the valve element (2), and the upper spring support (7) being arranged at a distance, D, from a bottom of the cover disc (4) in the use position of the cover disc (4).

## Description

The present invention relates to a valve insert for regulating a flow of a liquid through a valve.

WO 03/036143 A1 describes such a valve insert, which is according to the introductory part of claim 1 (this document hereby being incorporated herein by reference in its entirety). This valve insert is employed in such applications as cooling or heating systems in which a cooling or heating liquid such as water is flowing. All parts of this known valve insert are made of a metal, such as steel.

However, it is desired to employ such a valve insert also in flow systems on board off-shore vessels, in which the liquid flowing in the system comprises sea water. Due to the more corrosive nature of sea water, corrosion of the metal parts takes place which lowers the life time of the valve insert.

One possible solution would be to make the metal parts of a highly corrosion resistant metal. However, corrosion resistant metals and consequently also corrosion resistant metal parts in general and corrosion resistant springs in particular are very expensive.

It is therefore the object of the invention to provide a valve insert which is corrosion resistant while simultaneously being cost efficient in production and transport.

According to the invention, this is obtained by means of a valve insert comprising a valve housing with a closed bottom, an open top and at least one opening, a hollow valve element with a top end and a bottom end and an inner diameter, d2, the valve element being arranged to be displaceable within the valve housing along a longitudinal axis, L, of the valve insert between an open position in which the at least one opening is uncovered and a closed position in which the valve element covers the at least one opening, the bottom of the valve housing providing a valve seat for the bottom end of the valve element, a circumferential diaphragm extending between an outer surface of the valve element and an inner surface of the valve housing, a helical spring extending substantially along the longitudinal axis, L, having an outer spring diameter, d6, and being arranged within the valve element to bias the valve element towards the open position, the helical spring having a lower end supported by a lower spring support positioned at the bottom of and attached axially fixed to the valve housing and an opposite upper end supported by an upper spring support attached axially fixed to the valve element, and a cover disc with a central inlet opening, the cover disc being adapted for being positioned in a use position at the top end of the valve element in which use position the size of the central inlet opening presets a maximum flow through the valve insert, where the outer spring diameter, d6, is less than 90 % of the inner diameter, d2, of the valve element, and where the upper spring support is arranged at a distance, D, from a bottom of the cover disc in the use position of the cover disc..

By providing such a valve insert it becomes possible to use a helical spring which has a smaller diameter than those used in the prior art valve inserts, and which is therefore more cost efficient due to a smaller amount of corrosion resistant metal being needed. Thereby a valve insert which is cost efficient in production and transport is provided. At the same time the arrangement of the upper spring support at a distance from the cover disc has the effect of alleviating or preventing a pressure loss that would otherwise occur over the upper support element since this is positioned in the flow path. Furthermore, the arrangement of the upper spring support at a distance from the cover disc also has the effect of separating the spring support from the cover disc, and thereby of enabling the use of cover discs with an opening having a diameter larger than the diameter of the helical spring.

In an embodiment the valve insert further comprises an abutment projecting axially inwards from an inner surface of the valve element for supporting the cover disc in the use position, the abutment comprising an upper abutment surface for supporting a lower abutment surface of the cover disc, and wherein the distance, D, is larger than a thickness of the abutment measured in a longitudinal direction of the valve insert. In embodiments comprising an abutment for supporting the cover disc, experiments have shown that it is preferable to arrange the upper spring support at a distance from the cover disc larger than a thickness of the abutment in order to effectively prevent the pressure losses that would otherwise occur over the upper spring support.

In an embodiment the distance, D, between the upper spring support and the cover disc is at least 10 %, at least 25 % or at least 30 % of the inner diameter of the valve element. It is noted that generally the larger the distance between the upper spring support and the cover disc, the shorter the helical spring may be made and, in turn, the more cost efficient the helical spring and thus the valve insert will be.

In an embodiment at least one rib element is provided for attaching the upper spring support to the inner surface of the valve element. Thereby a particularly robust structure is provided for, which takes up very little space in the interior of the valve insert.

In a development of this embodiment the at least one rib element comprises a leg part extending along an inner surface of the valve element and supporting or providing the abutment for supporting the cover disc.

Embodiments in which the at least one rib element comprises a leg part extending along an inner surface of the valve element and providing the abutment for supporting the cover disc makes it possible to altogether omit the provision of a separate abutment for the cover disc, which in turn provides for a valve insert with a simpler and more robust structure.

In an embodiment the upper spring support comprises an at least partially circumferential leg part protruding in a direction away from the cover disc and comprising an inner diameter corresponding to the diameter of the helical spring. Such a circumferential leg part provides for further support of the end of the helical spring supported by the upper spring support, and thereby in turn for a more robust and durable valve insert.

In an embodiment the outer spring diameter, d6, of the helical spring is less than 80 %, less than 70 % or less than 60 % of the inner diameter, d2, of the valve element. It is noted that, generally, the smaller the diameter of the helical spring, here expressed in a percentage of the inner diameter, d2, of the valve element, the smaller the helical spring may be made and, in turn, the more cost efficient the helical spring and thus the valve insert will be. However, the diameter should be large enough to allow the spring to fulfil its purpose.

In an embodiment the valve insert further comprises a guide element arranged between the valve element and the valve housing adjacent the open end of the valve housing. The guide element may be a separate element or it may be provided as an integral part of the valve housing. This provides for a valve insert in which the pressure on the inlet side of the valve insert may be transferred to a surface of the diaphragm, thus providing the differential pressure across the diaphragm in a particularly simple way.

In an optional further development of this embodiment the guide element is adapted for fastening one of a first and a second circumferential end of the diaphragm to the outer surface of the valve element and/or for fastening the other of the first and second circumferential end of the diaphragm to the inner surface of the valve housing. This provides for a further simplified structure of the valve insert.

In an embodiment the force resulting from a differential pressure across the diaphragm is exerted in a direction substantially parallel with the longitudinal axis, L, of the valve insert, this direction being coincident with a plane of a circumferential contact surface provided between the valve element and the valve housing at the top end of the valve element. Thereby, a particularly smooth movement of the valve element with respect to the valve housing is provided for, which in turn provides for a particularly well functioning valve insert.

In an embodiment the diaphragm is a roller diaphragm.

In an embodiment the valve insert further comprises a fastening element adapted for fastening one of a first and a second circumferential end of the diaphragm to the outer surface of the valve element.

In an embodiment the valve insert further comprises a fastening element adapted for fastening the other of the first and second circumferential ends of the diaphragm to the inner surface of the valve housing. Thereby a particularly robust valve insert is provided for as the diaphragm is secured to the valve element and/or the valve housing in a particularly robust manner.

In an embodiment the distance, D, is at least 3 %, at least 5 %, at least 8 %, or at least 10 % of a length of the helical spring along the longitudinal axis, L, when measured in the open position of the valve insert, and or the distance, D, is less than 60 %, less than 70 %, or less than 80 % of a length of the helical spring along the longitudinal axis, L, when measured in the open position of the valve insert. This provides for an upper spring support positioned sufficiently far from the inlet opening to minimize the pressure loss across the upper spring support while providing a length of the spring sufficient to allow for the spring to vary out its intended function. Optimally, the distance, D, is 10 to 20 % of the length of the helical spring along the longitudinal axis, L, when measured in the open position of the valve insert.

In an embodiment the valve insert further comprises a releasable locking element adapted for locking the cover disc to the valve element. Thereby, the cover disc is held firmly and safely in place during transport and use of the valve insert, which in turn ensures that the cover disc is not lost during transport and does not fall off or shift position during use. Also, the cover disc can be readily exchanged to shift the inlet opening size and thus the preset maximum flow through the valve insert.

In an embodiment the valve insert further comprises a dampening element adapted for dampening oscillations of the helical spring inflicted by a liquid flowing through the valve insert. Thereby a valve insert is provided which is durable and stable in use, and in which excess wear of the helical spring is avoided.

In an embodiment the at least the valve housing and the valve element are made of a plastic material. Thereby a valve insert is provided which is cost efficient to produce, low in weight and thus also cost efficient to transport and which is furthermore very resistant towards corrosion, and in particular corrosion inflicted by sea water and like liquids.

The helical spring is preferably made of a corrosion resistant spring metal. Non-limiting examples are a galvanized spring metal, a painted spring metal, a stainless spring steel, phosphor bronze and beryllium copper. Other corrosion resistant spring metals are known within the art of springs.

The invention will be described in more detail below by means of a non-limiting example of a presently preferred embodiment and with reference to the schematic drawings, in which:
Fig. 1 shows a perspective view of an embodiment of a valve insert according to the invention,
Fig. 2 shows a cross sectional side view of the valve insert according to Fig. 1,
Fig. 3 shows a perspective cross sectional view of the valve insert according to Fig. 1,
Fig. 4 shows a top view of the valve insert according to Fig. 1 with the cover disc removed, and
Fig. 5 shows an exploded perspective view of the valve insert according to Fig. 1.

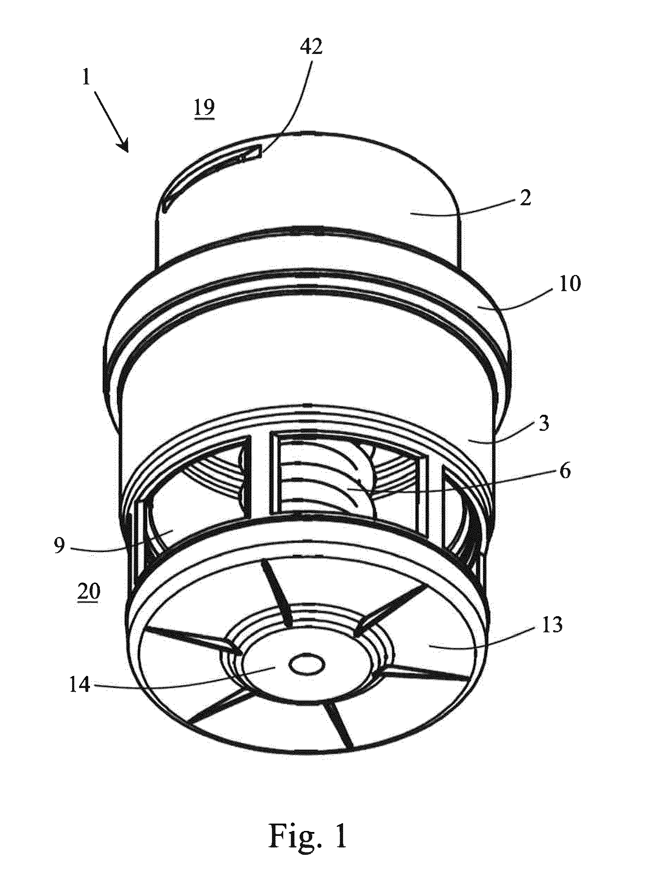

Figs. 1 to 5 show a valve insert 1 according to the invention for regulating a flow of a liquid through a valve. The liquid may in principle be any type of liquid. For instance a valve insert according to the invention may be used in on-shore or off-shore hot water or cold water installations leading or circulating fresh water or sea water. The valve insert according to the invention may even be used in installations involving transport of corrosive liquids.

The valve insert 1 comprises a valve housing 3, a valve element 2 and a helical spring 6.

The valve housing 3 comprises a closed bottom 13, an open top, an inner surface 31, an outer surface 32 and at least one opening 9.

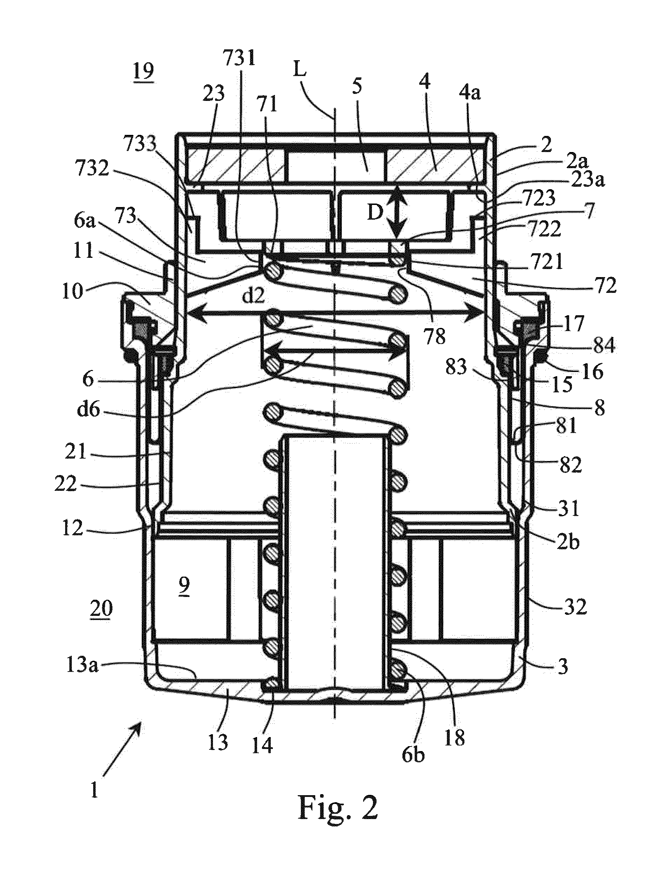

The openings 9 of the valve housing 3 form an outlet of the valve insert 1 for leading liquid out of the valve insert to an outlet side 20. The openings 9 are arranged adjacent the closed bottom 13 of the housing 3 and extend along the periphery of the circular cylindrical valve housing 3. The openings 9 are in the embodiment shown provided as a row of rectangular openings - cf. particularly Fig. 2. However, the openings 9 may be provided with any feasible shape.

For instance the openings 9 may be provided as longitudinal, slot-shaped openings with a cross-section decreasing in a direction towards the closed bottom of the valve housing 3.

Alternatively, the openings 9 may be provided as round openings or as partly parabolic openings with an apex pointing away from a central inlet opening 5 in a cover disc 4 or in other words towards the closed bottom 13 of the valve housing 3.

The openings 9 may also have different sizes and/or be arranged along the periphery of the valve housing 3 in accordance with increasing or decreasing size.

In yet another alternative, the openings 9 may have a cross-section which seen in a direction towards and starting away from the closed bottom first is increasing and then is decreasing.

The valve element 2 comprises a top end 2a, a bottom end 2b and an inner diameter d2. The valve element 2 is hollow.

The valve element 2 is arranged to be telescopically displaceable in the valve housing 3 between an open position in which the at least one opening 9 is uncovered and a closed position in which the valve element 2 covers the at least one opening 9 partially or completely. Put in other words, the valve element 2 is arranged to be displaceable within the valve housing 3 along a longitudinal axis, L, of the valve insert 1 between the open position and the closed position. The valve element 2 comprises an inner surface 21 and an outer surface 22.

In a not shown embodiment, the edge of the valve element 2 facing the closed bottom 13 of the valve housing 3 may be formed in an irregular manner. Thereby a too abrupt closing of the openings 9 which may in turn cause a partly unstable movement of the valve element towards its closed position may be avoided.

The helical spring 6 comprises an upper end 6a, a lower end 6b and an outer spring diameter d6. The helical spring 6 is adapted for biasing the valve element 2 towards the open position. The helical spring 6 is made of a corrosion resistant material such as a metal, a non-limiting example being a corrosion resistant spring steel.

With reference particularly to Fig. 2, the valve insert 1 further comprises a circumferential diaphragm 8.

The circumferential diaphragm 8 comprises an upper side 81, a lower side 82, a first circumferential end 83 and a second circumferential end 84. One of the first and second circumferential end 83 and 84, in the embodiment shown the first circumferential end 83, is attached to an outer surface 22 of the valve element 2. The other of the first and second circumferential end 83 and 84, in the embodiment shown the second circumferential end 84, is attached to an inner surface 31 of the valve housing 3.

The cover disc 4 is in a use position arranged at the top end 2a of the valve element 2 facing away from the closed end 13 of the valve housing 3. The central inlet opening 5 provided in the cover disc 4 may have any shape. The central inlet opening 5 is provided with a size suitable for the application in which the valve insert is to be used. The size of the central inlet opening 5 presets a maximum flow through the valve insert 1. Thus, the cover disc 4 may be exchangeable such as to provide for changing the size of the central inlet opening 5 and thereby a presetting of the maximum flow through the valve insert 1 in a simple and straight forward manner. Alternatively, the size of the central inlet opening 5 of one cover disc 4 may be directly adjustable.

Furthermore, the valve insert comprises an upper spring support 7 adapted for supporting one end, particularly the upper end 6a, of the helical spring 6. Generally, the upper spring support 7 is arranged in a distance, D, (cf. Fig. 2) from the cover disc.

Hence, the helical spring 6 is arranged such that it extends between the upper spring support 7 and the closed bottom 13 of the valve housing 3. In some embodiments the closed bottom 13 of the valve housing may furthermore comprise a lower spring support 14 adapted for supporting an end, particularly the lower end 6b, of the helical spring 6. The lower spring support 14 may for instance be a recess provided in the closed bottom 13.

In some embodiments the valve insert 1 comprises an abutment 23 for supporting the cover disc 4. In such embodiments the distance, D, is larger than a thickness of the abutment 23 measured in a longitudinal direction of the valve insert 1. The abutment 23 projects axially inwards from the inner surface 21 of the valve element 2 and comprises an upper abutment surface 23a for supporting a lower abutment surface 4a of the cover disc 4 - cf. Fig. 2.

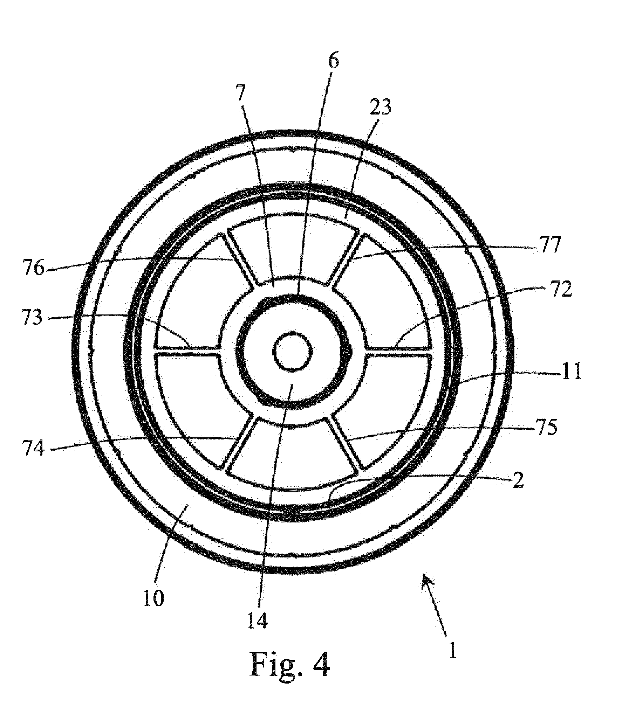

Generally, at least one rib element 72 is provided for attaching the upper spring support 7 to the inner surface 21 of the valve element 2. In the embodiment shown six such rib elements 72-76 are provided - cf. Fig. 4. However, any other number of rib elements, such as one through five or more than six may be provided.

The at least one rib element 72 is generally made as thin as possible, such as for instance with a thickness of below 2 mm, below 1,5 mm, below 1 mm or even below 0,5 mm.

The upper spring support 7, the at least one rib element 72 and the valve element 3 may be provided as one integrally shaped or cast element.

As shown on Fig. 2, each rib element 72, 73 comprise a leg part 722, 723, respectively, extending along the inner surface 21 of the valve element. The leg part 722, 723 comprises an upper surface 723, 733, respectively.

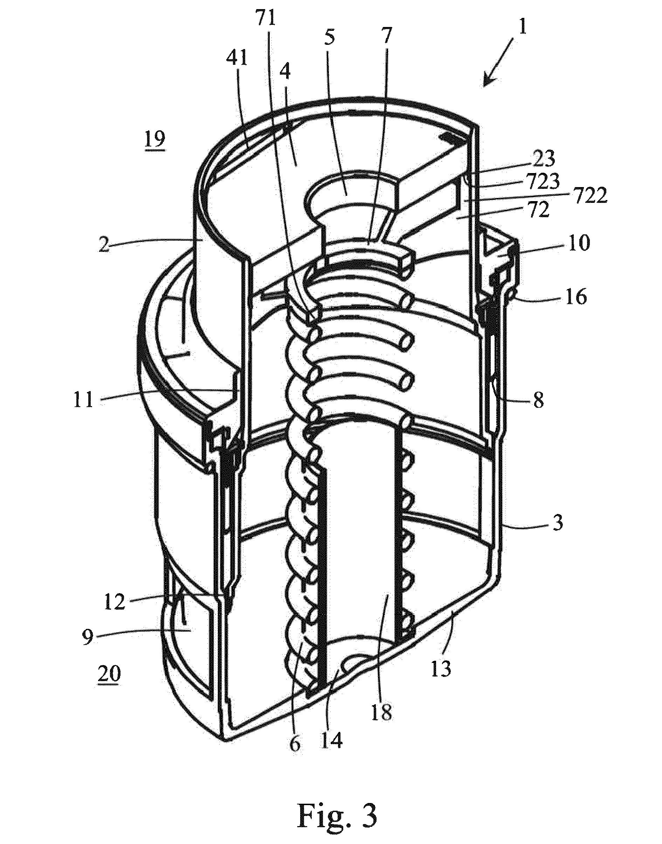

The leg part 722, 723 and particularly the upper surface 723, 733 may in some embodiments and as indicated on Fig. 3 support or even provide the abutment 23 and/or the upper abutment surface 23a for supporting the cover disc 4.

Furthermore, the upper spring support 7 comprises an at least partially circumferential leg part 78 protruding in a direction away from the cover disc 4 and comprising an inner diameter corresponding to the diameter, d6, of the helical spring 6. In the embodiment shown the leg part 78 is provided as a surface 721, 731 of the respective rib elements 72, 73.

It is noted that the leg parts 722, 723 of the rib elements 72, 73, the upper surface 723, 733 and the leg part 78 are all optional elements.

The valve insert 1 further comprises a guide element 10 arranged between the valve element 2 and the valve housing 3 adjacent the open end of the valve housing 3.

In some embodiments the guide element 10 may be adapted for fastening one of the first and second circumferential end 83, 84 of the diaphragm 8 to the outer surface 22 of the valve element 2 and/or for fastening the other of the first and second circumferential end 83, 84 of the diaphragm 8 to the inner surface 31 of the valve housing 3.

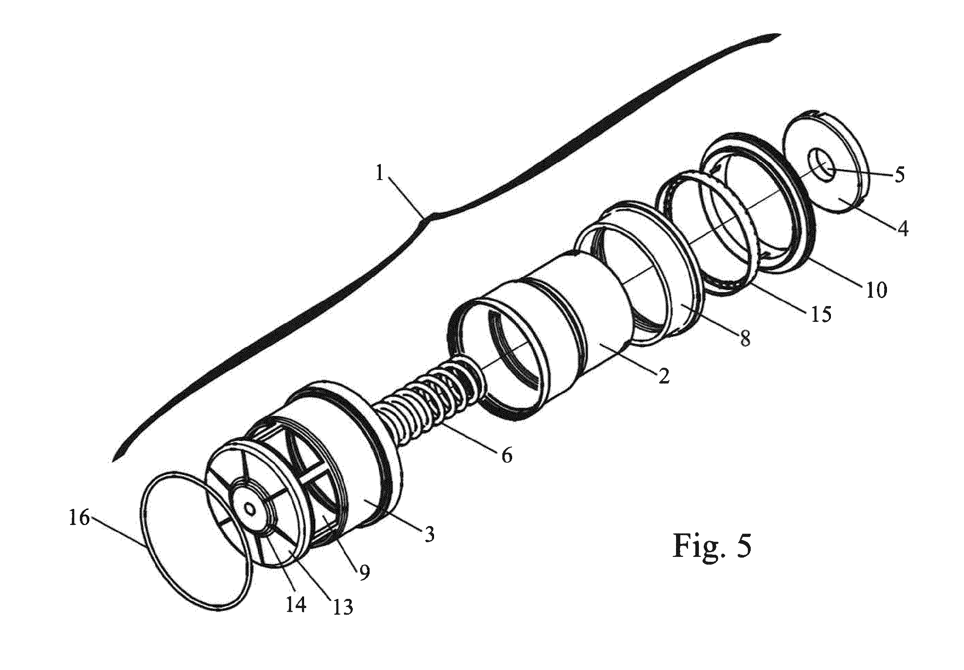

Furthermore, the guide element 10 is provided as a separate element (cf. e.g. Fig. 5) but may in other embodiments be provided in one piece with the valve housing 3.

The guide element 10 is shaped in such a way that a circumferential spacing or channel 11 is formed between the valve element 2 and the guide element 10. The dampening of the movement of the valve element 2 may be adjusted by adjusting the size of the circumferential spacing or channel 11. This may for instance be done by replacing the guide element 10 with a guide element having a different shape providing a circumferential spacing or channel of a different size.

The valve insert furthermore comprises a fastening element 15 adapted for fastening the first circumferential end 83 of the diaphragm 8 to the outer surface 22 of the valve element 2 and a fastening element 17 adapted for fastening the second circumferential end 84 of the diaphragm 8 to the inner surface 31 of the valve housing 3 and/or to the guide element 10.

The fastening elements 15 and 17 may be any suitable type of fastening element, non-limiting examples being a clamping ring, a number of fastening elements arranged along the periphery of the valve element 2 or valve housing 3 or even a suitable adhesive. In the embodiment shown the fastening element 15 is a clamping ring (cf. Fig. 5), while the fastening element 17 forms an integral part of the guide element 10.

The valve insert 1 further comprises a locking element 40, 41 adapted for locking the cover disc 4 to the valve element 2. In the embodiment shown, the locking element 40, 41 is a snap-locking mechanism provided as a resilient protrusion 41 on the cover disc 4 (cf. Fig. 3) and a corresponding recess 42 in the valve element 2 (cf. Fig. 1). In other embodiments the locking element may be a locking ring.

The valve insert 1 further comprises a dampening element 18 adapted for dampening oscillations of the helical spring inflicted by a fluid or liquid flowing through the valve insert 1. The dampening element 18 is in the non-limiting embodiment shown cylindrical and is arranged inside the helical spring 6 such as to extend from the closed bottom 13 of the valve housing in the longitudinal axis, L, of the valve insert 1.

It is noted that the fastening elements 15 and 17, the locking element 40, 41 and particularly the dampening element 18 are all optional elements.

The valve insert 1 according to the invention works as follows.

The valve insert 1 is intended for insertion in a valve forming part of a system in which a fluid or liquid flows, e.g. as described in the applicant's WO 03/036143 A1.

In order to ensure that the fluid or liquid flowing in the system may not flow along the outer surface 32 of the valve housing 3 a sealing element 16 may in some embodiments be provided such as to seal the valve housing 3 against a wall of the valve of the system in which the valve insert 1 is inserted. Thereby the fluid or liquid flowing in the system is forced to flow though the valve insert 1.

Furthermore, an annular projection (not shown) may be provided at the closed bottom 13 of the valve housing 3 such as to secure the valve insert 1 in place by engaging the annular projection in a corresponding recess in the valve of the system in which the valve insert 1 is inserted.

The valve insert 1 may also be inserted directly into a straight piece of piping forming part of a system in which a fluid or liquid flows. In this case the piece of piping is of such a dimension that it is possible for the flowing fluid or liquid to pass between the inner wall of the piece of piping and the outer surface 22 of the valve element 2 of the valve insert 1. Between the inner wall of the piece of piping and the valve insert 1 a sealing element 16 may be provided such as to seal the valve housing 3 against the inner wall of the piece of piping. Thereby the fluid or liquid flowing in the system is forced to flow though the valve insert 1.

The fluid or liquid flowing in the system will enter the valve insert 1 at the inlet side 19 through the central inlet opening 5 in the cover disc 4, flow though the valve insert 1 and exit at the outlet side 20 through the at least one opening 9 adjacent the closed bottom 13 of the valve housing 3.

An inlet pressure exerted by the fluid or liquid flowing in the system prevails on the inlet side 19 of the valve insert 1. As a small amount of the fluid or liquid may enter and flow through the channel 11, the channel 11 serves to ensure that the upper surface 81 of the diaphragm 8 is subjected to the inlet pressure prevailing on the inlet side 19 of the valve insert 1.

Simultaneously, the lower surface 82 of the diaphragm 8 is subjected to a pressure being different from, and predominantly smaller than, the inlet pressure. Thereby a differential pressure is created across the diaphragm 8.

The diaphragm 8 is arranged in the valve insert 1 such that the force resulting from the differential pressure across the diaphragm 8 is exerted or directed in a direction being substantially parallel with a longitudinal axis, L, (cf. Fig. 1) of the valve insert 1.

More particularly, the diaphragm 8 is arranged in the valve insert 1 such that the force resulting from a differential pressure across the diaphragm 8 is exerted or directed in a direction being substantially parallel with the longitudinal axis, L, of the valve insert 1 and extending in the plane of a contact surface 12 provided between the valve element 2 and the valve housing 3 at an end of the valve element 2 facing the closed end 13 of the valve housing 3.

Thereby, the force resulting from the differential pressure across the diaphragm 8 causes the valve element 2 to be displaced along the longitudinal axis, L, towards the closed position.

Simultaneously the spring force exerted by the helical spring 6 as well as the force exerted by the fluid or liquid flowing downstream of the cover disc 4 on the valve element 2 is directed in a direction opposite to the force resulting from the differential pressure across the diaphragm 8.

Thereby a constant pressure difference across the central inlet opening 5 in the cover disc 4 is obtained which in turn ensures that a constant flow through the valve insert 1 is maintained at all times.

In order to ensure a constant flow at an increasing differential pressure across the diaphragm 8 one may change the spring characteristics of the helical spring 6 and/or the size of the central inlet opening 5. Alternatively or in addition thereto it is also possible during manufacture of the valve insert 1 to take into account the piston area of the valve element 2, and thereby to produce a valve insert 1 with a constant flow at increasing differential pressure across the diaphragm 8, at least when operating above a lower threshold of the pump pressure or operational pressure of the system in which the valve insert 1 is employed.

It is noted that all elements of the valve insert 1 except the diaphragm 8 and the helical spring 6 are in the embodiment shown made of a plastic material, particularly a rigid plastic material, such as reinforced Polyphenylene Sulfide, Polyphthalamide or the like.

It should be noted that the above description of preferred embodiments serves only as examples, and that a person skilled in the art will know that numerous variations are possible without deviating from the scope of the claims.

The person skilled in the art realizes that the present invention by no means is limited to the preferred embodiments described above. On the contrary, many modifications and variations are possible within the scope of the appended claims.

## Claims

1. A valve insert (1) for regulating a flow of a liquid through a valve, the valve insert comprising:
a valve housing (3) with a closed bottom (13), an open top and at least one opening (9),
a hollow valve element (2) with a top end (2a) and a bottom end (2b) and an inner diameter, d2, the valve element (2) being arranged to be displaceable within the valve housing (3) along a longitudinal axis, L, of the valve insert (1) between an open position in which the at least one opening (9) is uncovered and a closed position in which the valve element (2) covers the at least one opening (9), the bottom (13) of the valve housing (3) providing a valve seat (13a) for the bottom end (2b) of the valve element (2),
a circumferential diaphragm (8) extending between an outer surface (22) of the valve element (2) and an inner surface (31) of the valve housing (3),
a helical spring (6) extending substantially along the longitudinal axis, L, having an outer spring diameter, d6, and being arranged within the valve element (2) to bias the valve element (2) towards the open position, the helical spring (6) having a lower end (6b) supported by a lower spring support (14) positioned at the bottom (13) of and attached axially fixed to the valve housing (3) and an opposite upper end (6a) supported by an upper spring support (7) attached axially fixed to the valve element (2), and
a cover disc (4) with a central inlet opening (5), the cover disc (4) being adapted for being positioned in a use position at the top end of the valve element (2) in which use position the size of the central inlet opening (5) presets a maximum flow through the valve insert (1),
**characterized in that**
the outer spring diameter, d6, is less than 90 % of the inner diameter, d2, of the valve element (2), and
the upper spring support (7) is arranged at a distance, D, from a bottom of the cover disc (4) in the use position of the cover disc (4).

2. A valve insert (1) according to claim 1, further comprising an abutment (23) projecting axially inwards from an inner surface (21) of the valve element (2) for supporting the cover disc (4) in the use position, the abutment (23) comprising an upper abutment surface (23a) for supporting a lower abutment surface (4a) of the cover disc (4), and wherein the distance, D, is larger than a thickness of the abutment (23) measured in a longitudinal direction of the valve insert (1).

3. A valve insert (1) according to claim 1 or 2, wherein the distance, D, between the upper spring support (7) and the cover disc (4) is at least 20 %, at least 25 % or at least 30 % of the inner diameter of the valve element (2).

4. A valve insert (1) according to any one of the above claims, wherein at least one rib element (72) is provided for attaching the upper spring support (7) to the inner surface (21) of the valve element (2).

5. A valve insert (1) according to claim 4, wherein the at least one rib element comprises a leg part (722) extending along an inner surface (21) of the valve element and supporting or providing the abutment (23; 723) for supporting the cover disc (4).

6. A valve insert (1) according to any one of the above claims, wherein the spring support (7) comprises an at least partially circumferential leg part (78) protruding in a direction away from the cover disc (4) and comprising an inner diameter corresponding to the diameter of the helical spring (6).

7. A valve insert (1) according to any one of the above claims, wherein the outer spring diameter, d6, of the helical spring (6) is less than 80 %, less than 70 %, or less than 60 % of the inner diameter, d2, of the valve element (2).

8. A valve insert (1) according to any one of the above claims, and further comprising a guide element (10) arranged between the valve element (2) and the valve housing (3) adjacent the open end of the valve housing (3), the guide element (10) optionally being adapted for fastening one of a first and a second circumferential end (83, 84) of the diaphragm element to the outer surface (22) of the valve element (2) and/or for fastening the other of the first and second circumferential ends (83, 84) of the diaphragm (8) to the inner surface (31) of the valve housing (3).

9. A valve insert (1) according to any one of the above claims, wherein a force resulting from a differential pressure across the diaphragm (8) is exerted in a direction substantially parallel with the longitudinal axis, L, of the valve insert (2), this direction being coincident with a plane of a circumferential contact surface (12) provided between the valve element (2) and the valve housing (3) at the top end (2a) of the valve element (2).

10. A valve insert (1) according to any one of the above claims, and further comprising one or more of:
a fastening element (15) adapted for fastening one of a first and a second circumferential end (83, 84) of the diaphragm (8) to the outer surface (22) of the valve element (2), and
a fastening element (17) adapted for fastening the other of the first and second circumferential ends (83, 84) of the diaphragm (8) to the inner surface (31) of the valve housing (3).

11. A valve insert (1) according to any one of the above claims, wherein the distance, D, is at least 3 %, at least 5 %, at least 8 %, or at least 10 % of a length of the helical spring (6) along the longitudinal axis, L, when measured in the open position of the valve insert (1), and/or the distance, D, is less than 60 %, less than 70 %, or less than 80 % of a length of the helical spring (6) along the longitudinal axis, L, when measured in the open position of the valve insert (1).

12. A valve insert (1) according to any one of the above claims, and further comprising a releasable locking element (40; 41) adapted for locking the cover disc (4) to the valve element (2).

13. A valve insert (1) according to any one of the above claims, and further comprising a dampening element (18) adapted for dampening oscillations of the helical spring (6) inflicted by a liquid flowing through the valve insert (1).

14. A valve insert (1) according to any one of the above claims, wherein at least the valve housing (3) and the valve element (2) are made of a plastic material.

15. A valve insert (1) according to any one of the above claims, wherein the helical spring (6) is made of a corrosion resistant metal selected from the group consisting of galvanized spring metal, painted spring metal, stainless spring steel, phosphor bronze and beryllium copper.
